# EUROPÄISCHE PATENTSCHRIFT

(11) **EP 1 954 481 B1**
(45) Veröffentlichungstag und Bekanntmachung des Hinweises auf die Patenterteilung: **24.03.2010**
(21) Anmeldenummer: 06807023.4
(22) Anmeldetag: 06.10.2006
(51) Int. Cl.: B29D 30/70, B29D 30/24, B29D 30/26, B60C 9/18

(54) **VERFAHREN ZUM HERSTELLEN EINES GÜRTELPAKETS FÜR EINEN FAHRZEUGLUFTREIFENS**
METHOD FOR PRODUCING A BELT PACKAGE FOR A PNEUMATIC VEHICLE TYRE
PROCEDE DE FABRICATION D'UN ENSEMBLE DE CEINTURE POUR BANDAGES PNEUMATIQUES DE VEHICULE

(30) Priorität: 16.11.2005 DE 102005054507
(43) Veröffentlichungstag der Anmeldung: 13.08.2008
(73) Patentinhaber: Continental Reifen Deutschland GmbH, 30165 Hannover (DE)
(72) Erfinder: SEEVERS, Jörn, 31303 Burgdorf (DE); KNEUSSEL, Ewald, 30890 Barsinghausen (DE); KIRSCHNING, Oliver, 30657 Hannover (DE)
(74) Vertreter: Finger, Karsten
(86) Internationale Anmeldenummer: PCT/EP2006/067121
(87) Internationale Veröffentlichungsnummer: WO 2007/057250

(56) Entgegenhaltungen:
- EP-A1- 1 226 925
- EP-A2- 0 537 780
- WO-A-00/46018
- WO-A-2005/095092
- DE-C1- 19 918 523
- JP-A- 11 309 790
- US-A- 3 151 013
- US-A- 4 846 907
- US-A1- 2001 008 158

## Beschreibung

Die Erfindung betrifft ein Verfahren zum Herstellen eines Gürtelpakets für Fahrzeugluftreifen bestehend aus zumindest zwei Gürtellagen.

Aus der EP 1 226 925 A1 ist ein Verfahren zum Herstellen von Gürtellagenmaterial für einen Reifen bekannt, bei dem auf einer Gürteltrommel mit einem vorgegebenen Außendurchmesser ein Band aus gummierten Festigkeitsträgern spiralförmig um die äußere Umfangsoberfläche gewickelt wird. Der derart entstehende zylindrische Körper wird mit einem Messer unter einem vorgegebenen Abstand geschnitten, um derart ein Gürtellagenmaterial mit einer vorgegebenen Breite und einem vorgegebenen Neigungswinkel der Festigkeitsträger zu bilden. Zur Herstellung des Gürtellagenmaterials für die zweite Gürtellage wird eine Trommel mit einem etwas größeren Durchmesser verwendet, wobei die Wickelrichtung des bandförmigen Materials gegensinnig ist zu jener des bereits erstellten Gürtellagenmaterials, sodass Gürtellagen mit gekreuzten Festigkeitsträgern gebildet werden können.

Die DE 41 08 260 A1 beschreibt ein Verfahren zum Herstellen von Laufstreifen/Gürtelpaketen für Fahrzeugluftreifen, welches es gestattet, eine große Anzahl von Laufstreifen/Gürtelpaketen in möglichst kurzer Zeit herzustellen. Dabei werden auf einer ersten von zwei auf koaxialen Wellen angeordneten und unabhängig voneinander antreibbaren Gürteltrommeln zumindest zwei Lagen eines Gürtels aufgelegt, die von einem Gürtellagenzubringer abgezogen werden. Das vollständige Gürtellagenpaket wird mittels einer Überführungsvorrichtung auf die zweite Gürteltrommel übergeben, auf welcher durch Spulen eine Wickelbandage erstellt und ein Laufstreifen aufgelegt werden. Unterdessen werden im Wesentlichen gleichzeitig auf der ersten Gürteltrommel die Gürtellagen für ein weiteres Gürtelpaket aufgebracht. Das fertige Laufstreifen/Gürtelpaket wird mittels einer Überführungsvorrichtung der zweiten Gürteltrommel entnommen.

Bei dem aus der DE 40 21 672 A bekannten Verfahren wird zur Automatisierung der Reifenfertigung vorgeschlagen, die einzelnen Lagen eines Gürtels auf einer ersten Gürteltrommel aufzuwickeln, wobei eine zweite Gürteltrommel vorgesehen ist, und zweite und erste Gürteltrommel derart ausgeführt sind, dass sie axial ineinander gebracht werden können. Somit können die Segmente der zweiten Gürteltrommel das Lagenpakt erfassen, wobei anschließend die beiden Gürteltrommeln voneinander entfernt werden und auf der ersten Gürteltrommel ein weiteres Lagenpaket erzeugt werden kann. Auf der zweiten Gürteltrommel wird das erste Lagenpaket gegebenenfalls mit einer Spulbandage komplettiert und anschließend mit dem Laufstreifen zu einem kompletten Laufstreifen/Gürtelpaket vervollständigt.

Beim sukzessiven Auflegen der einzelnen Lagen mehrlagiger Gürtel kommt es immer wieder vor, dass die Auflagefläche einer aufgebrachten Gürtellage nicht mehr zylindrisch sondern deutlich konturiert bzw. uneben ist. Dies kann darauf zurückzuführen sein, dass die aufeinander aufgelegten Materialien für die Gürtellagen unterschiedliche Dicken und Breiten aufweisen oder, dass an den Gürtelkanten zwischendurch weitere Bauteile, wie etwa Abdeckstreifen oder Gürtelkantenpolster, aufgebracht werden. Mit jeder aufgelegten Materialbahn und jedem aufgelegtem Bauteil wird die Auflagefläche unregelmäßiger. Die derart entstehende konturierte Auflagefläche erlaubt es nicht, mit den derzeit zur Verfügung stehenden Einrichtungen die darauffolgende Materialbahn automatisch aufzulegen und automatisch zu spleißen.

Der Erfindung liegt die Aufgabe zugrunde, ein Verfahren zur Verfügung zu stellen, mit welchem ein automatisches Auflegen und automatisches Spleißen sämtlicher Gürtellagen eines Gürtelpakets möglich ist, auch wenn zusätzliche Bauteile, wie Gürtelkantenpolster, aufzubringen sind und sich während des Gürtelaufbaus eine konturierte Außenkontur der bereits aufgebrachten Gürtellage(n) ergibt.

Gelöst wird die gestellte Aufgabe erfindungsgemäß dadurch, dass das Gürtelpaket aus zumindest zwei Teilpaketen erstellt wird, welche zum kompletten Gürtelpaket zusammengefügt werden, wobei jedes Teilpaket aus zumindest einer Gürtellage besteht, die auf einer Gürteltrommel automatisch aufgelegt und automatisch gespleißt wird, wobei ein Teilpaket von der Gürteltrommel an einen Gürteltragering übergeben wird und an diesem vorerst positioniert bleibt, der Gürteltragering über einer Gürteltrommel, auf welcher ein zweites Teilpaket aufgebaut ist, positioniert wird und das Teilpaket des Gürteltrageringes mit jenem auf der Gürteltrommel zusammengefügt wird.

Das erfindungsgemäße Verfahren erlaubt es, sämtliche Gürtellagen automatisch aufzulegen und automatisch zu spleißen. Die Teilpakete werden derart erstellt, dass insbesondere dann, wenn eine Materialbahn zu uneben würde, um ein automatisches Auflegen und automatischen Spleißen der nächstfolgenden Gürtellage zu ermöglichen, die verbleibende Gürtellage bzw. die verbleibenden Gürtellagen in zumindest einem zusätzlichen Teilpaket gesondert aufgebaut werden, wobei die Teilpakete anschließend miteinander verbunden werden.

Das erfindungsgemäße Verfahren kann ferner auf eine sehr rationelle Weise durchgeführt werden. In diesem Zusammenhang ist es von Vorteil, wenn zumindest eines der Teilpakete von der Gürteltrommel an einen Gürteltragering übergeben wird und bis zum Zusammenfügen mit einem anderen Teilpaket an diesem positioniert bleibt. Dabei kann das auf einer Gürteltrommel aufgebaute Teilpaket mit einem an einem Gürteltragering gehaltenen Teilpaket zusammengefügt werden. Ein weitere Vorteil des Verfahren besteht darin, dass die erforderliche Anzahl von Gürteltrageringen und Gürteltrommeln verwendet werden kann.

Mit dem erfindungsgemäßen Verfahren können komplette Gürtelpakete auf sehr flexible Weise aufgebaut und erstellt werden. So kann beispielsweise in jedem Teilpaket eine Gürtellage erstellt werden oder es können zwei oder mehr Gürtellagen in einem Teilpaket enthalten sein. Üblicherweise werden dabei auf zumindest eines der Teilpakete als äußerste Bauteile Gürtelkantenpolster, Kantenstreifen oder ähnliche Bauteile aufgebracht. Gerade diese Bauteile würden eine sehr konturierte unebene Auflagefläche für die nachfolgende Gürtellage zur Verfügung stellen. Gemäß der Erfindung ist eine unmittelbare Auflage der nächstfolgenden Gürtellage nicht mehr notwendig.

Vor dem Zusammenfügen zweier Teilpakete, von welchen sich das eine an einem Gürteltragering und das zweite auf einer Gürteltrommel befindet, braucht lediglich der Gürteltragering über der Gürteltrommel positioniert werden. Nachfolgend kann auf sehr einfache Weise ein Zusammenfügen der beiden Teilpakete durchgeführt werden. Die hier zur Verfügung stehenden Alternativen umfassen ein Zusammenfügen durch ein Verringern des Innendurchmessers des Gürteltragerings, ein Zusammenfügen durch eine Vergrößerung des Außendurchmessers der Gürteltrommel sowie eine gleichzeitige Kombination dieser beiden Maßnahmen.

Wird eine Gürteltrommel verwendet, deren Auflagefläche leicht konkav gewölbt ist, können auf einer derartigen Gürteltrommel die Gürtellagen bereits etwas vorkonturiert erstellt werden.

Eine derart ausgeführte Gürteltrommel wird bevorzugt mit einem Gürteltragering eingesetzt, dessen Innenfläche leicht konvex gewölbt ist.

Weitere Merkmale, Vorteile und Einzelheiten der Erfindung werden nun anhand der schematischen Zeichnung, die ein Ausführungsbeispiel darstellt, näher beschrieben. Dabei zeigen

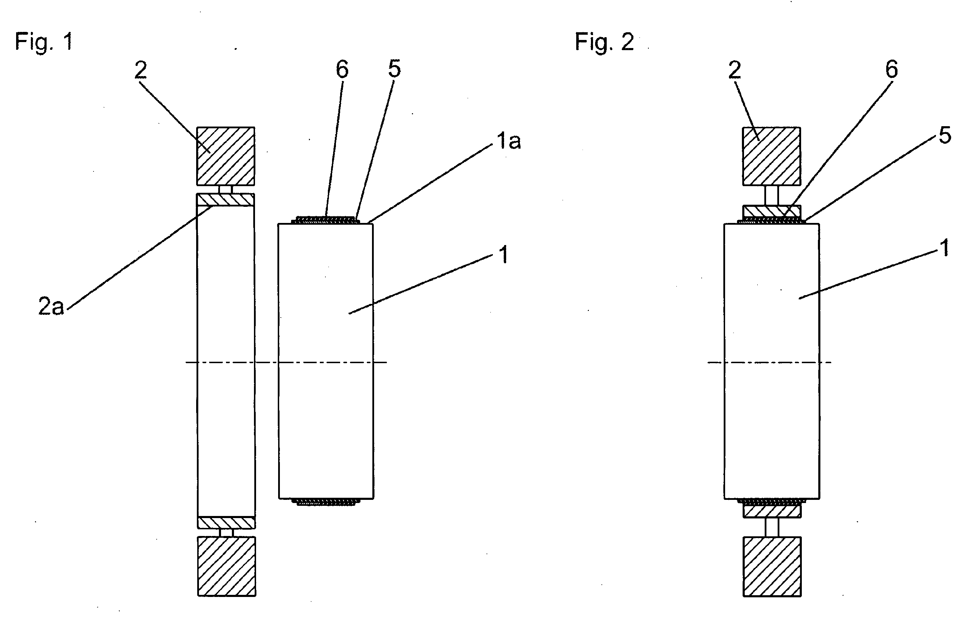

Fig. 1 bis Fig. 5 ein Ausführungsbeispiel der Erfindung anhand einzelner Schritte beim Aufbau eines vierlagigen Gürtels eines Fahrzeugluftreifens unter Verwendung einer Gürteltrommel und eines Gürteltrageringes.

Die Figuren zeigen eine Anordnung bestehend aus einer Gürteltrommel 1 mit einer zylindrischen Auflagefläche und einem Gürteltragering 2 mit einer zylindrischen Innenfläche 2a, wobei jeweils die Mantelfläche eines Zylinders gemeint ist. Zumindest eines der beiden Bauteile, bevorzugt jedoch beide, ist bzw. sind in bekannter Weise segmentiert ausgeführt und in radialer Richtung expandierbar und einfahrbar. Das erfindungsgemäße Verfahren wird anhand des Aufbaus eines vier Gürtellagen 3, 4, 5, 6 aufweisenden Gürtelpakets mit zwei Gürtelkantenpolstern 7 zwischen der zweiten und der dritten Gürtellage 4, 5 näher beschrieben. Ein derart aufgebautes Gürtelpaket wird beispielsweise in Fahrzeugluftreifen für Schwerlastfahrzeuge eingesetzt. Die radial innerste Gürtellage 3 wird als erste Gürtellage, die radial äußerste Gürtellage 6 wird als vierte Gürtellage bezeichnet. Die Gürtellagen 3, 4, 5, 6 werden in bekannter Weise aus abgelängten Bahnen aus in eine Kautschukmischung eingebetteten Stahlkorden hergestellt.

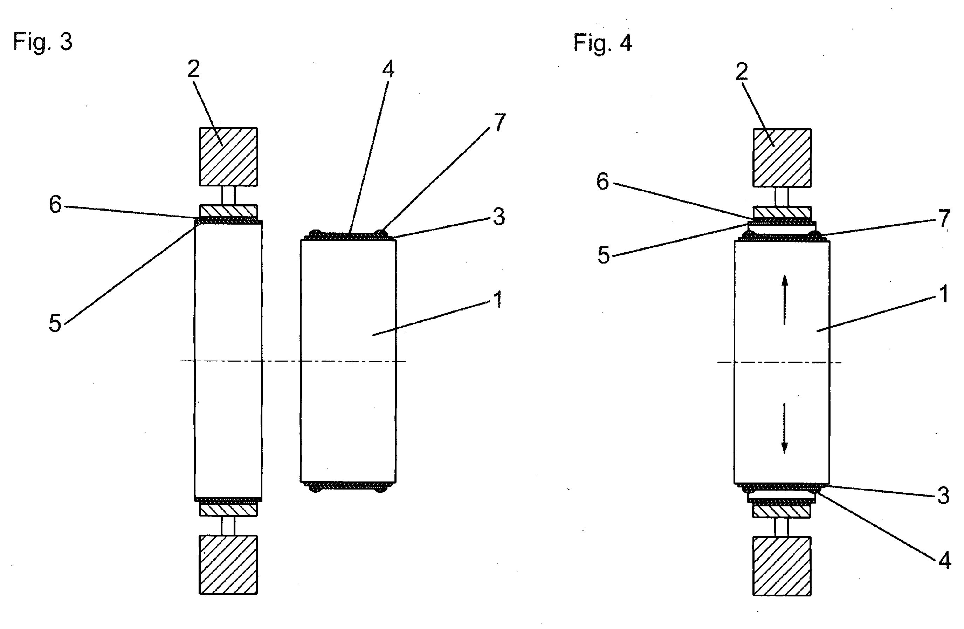

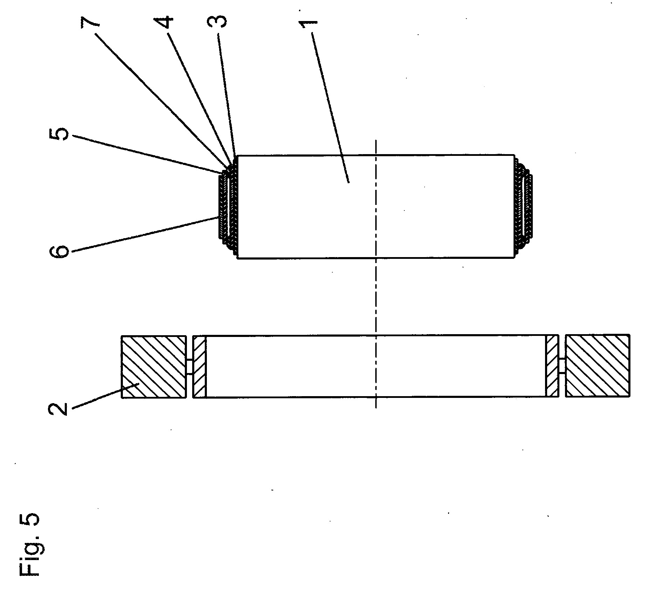

Zum Aufbau des vierlagigen Gürtelpakets werden auf die zylindrische Gürteltrommel 1 die dritte Gürtellage 5 und anschließend die vierte Gürtellage 6 automatisch aufgelegt und automatisch gespleißt. Fig. 1 zeigt das auf der Gürteltrommel 1 befindlichen fertigen Teilpaket aus den Gürtellagen 5 und 6. Nun wird der Gürteltragering 2 über die Gürteltrommel 1 verfahren und in radialer Richtung zur Verkleinerung seines Innendurchmessers eingefahren. Mittels nicht dargestellter Klemmvorrichtungen übernimmt der Gürteltragering 2 das Teilpaket aus dritter und vierter Gürtellage 5, 6. Fig. 2 zeigt die Gürteltrommel 1 und den Gürteltragering 2 knapp vor der Übernahme des Teilpakets an den beiden Gürtellagen 5, 6. Während die beiden Gürtellagen 5, 6 am Gürteltragering 2 positioniert bleiben, werden auf der zylindrischen Gürteltrommel 1 die erste Gürtellage 3 und anschließend die zweite Gürtellage 4 automatisch aufgelegt und automatisch gespleißt. Nun werden an den seitlichen Rändern der Gürtellage 4 die beiden Gürtelkantenpolster 7, dies sind. Profile aus einer Kautschukmischung, aufgelegt. Fig. 3 zeigt dieses Stadium des Aufbaus des Teilpakets aus den Gürtellagen 3, 4 und den Polstern 7. Nun wird der Gürteltragering 2 über der Gürteltrommel 1 positioniert, wie es in Fig. 4 dargestellt ist. Durch radiale Expansion der Segmente der Gürteltrommel 1 werden die auf der Gürteltrommel 1 befindlichen Bauteile - die erste und die zweite Gürtellage 3, 4 sowie die beiden Gürtelkantenpolster 7 - mit der dritten und vierten Gürtellage 5, 6 am Gürteltragering 2 verbunden. Nun wird die Klemmung der Gürtellagen 5, 6 gelöst und der Gürteltragering 2 in eine Position seitlich der Gürteltrommel 1 verfahren, wie es Fig. 5 zeigt. Das fertige Gürtelpaket befindet sich nun auf der Gürteltrommel 1. Der Aufbau des Rohreifens mit einem derart hergestellten Gürtelpaket kann in bekannter Weise durchgeführt werden. So wird insbesondere das fertige Gürtelpaket mit einem Laufstreifen versehen, an eine Transfereinrichtung übergeben und durch diesen zu einer bereits aufgebauten Reifenkarkasse transferiert und auf der Reifenkarkasse positioniert.

Bei nach dem erfindungsgemäßen Verfahren aufgebauten Gürtelpaketen wird vermieden, dass eine Gürtellage direkt auf einen eine konturierte Auflagefläche aufweisenden Unterbau aufgebracht werden muss. Dies wäre etwa dann der Fall, wenn die dritte Gürtellage 5 direkt auf die mit den beiden Gürtelkantenpolstern 7 versehene zweite Gürtellage 4 aufgebracht würde. In diesem Fall wäre es nicht mehr möglich, die dritte und die vierte Gürtellage automatisch aufzulegen und automatisch zu spleißen.

Bei der dargestellten Ausführungsform wird das Teilpaket aus erster und zweiter Gürtellage 3, 4 und den beiden Gürtelkantenpolstern 7 im Durchmesser vergrößert, um mit dem zweiten Teilpaket bestehend aus der dritten und der vierten Gürtellage 5, 6 verbunden zu werden. Alternativ dazu kann auch vorgesehen sein, das Teilpaket aus dritter und vierter Gürtellage 5, 6 im Durchmesser zu verkleinern, um die Verbindung zum Gürtelteilpaket aus erster und zweiter Gürtellage 3, 4 und den beiden Gürtelkantenpolstern 7 herzustellen. Die Durchmesserverkleinerung erfolgt durch den Gürteltragering 2. Bei einer weiteren möglichen Alternative können die beiden Teilpakete durch eine Durchmesservergrößerung der Gürteltrommel 1 und eine gleichzeitige Durchmesserverkleinerung des Gürteltrageringes 2 zusammen gefügt werden.

Es können mehrere Gürteltrageringe und mehrere Gürteltrommeln verwendet werden. Dadurch kann der Aufbau des Gürtelpakets weitgehend flexibel erfolgen. So kann bei einer weiteren, gesondert nicht gezeigten Ausführungsvariante die gespleißte dritte Gürtellage 5 von der Gürteltrommel auf einen Gürteltragering übergeben werden und die vierte Gürtellage 6 allein auf der Gürteltrommel automatisch aufgelegt und gespleißt werden. Ein Zusammenfügen der beiden Gürtellagen 5, 6 kann analog zu den in den Figuren 3 bis 5 gezeigten Verfahrensschritten erfolgen. Gleichermaßen kann das Teilpaket aus der ersten und der zweiten Gürtellage mit anschließendem Auflegen der beiden Gürtelkantenpolster 7 erstellt werden. Dabei kann vorgesehen sein, zusätzlich Gürtelrandstreifen bei einer oder mehreren der Gürtellagen 3, 4, 5 und 6 aufzulegen.

Wie beschrieben kann die Gürteltrommel bzw. können die Gürteltrommeln eine zylindrische Auflagefläche zur Verfügung stellen. Alternativ dazu ist es möglich, eine im Querschnitt leicht konkav konturierte Auflagefläche an der Gürteltrommel bzw. den Gürteltrommeln vorzusehen. Auf analoge Weise können auch die Segmente des oder der Gürteltragering(e)s konturiert sein, hier mittels einer im Querschnitt leicht konvexen Wölbung.

## Patentansprüche

1. Verfahren zum Herstellen eines Gürtelpakets für Fahrzeugluftreifen bestehend aus zumindest zwei Gürtellagen,
**dadurch gekennzeichnet,**
**dass** das Gürtelpaket aus zumindest zwei Teilpaketen erstellt wird, welche zum kompletten Gürtelpaket zusammengefügt werden, wobei jedes Teilpaket aus zumindest einer Gürtellage (3, 4; 5, 6) besteht, die auf einer Gürteltrommel (1) automatisch aufgelegt und automatisch gespleißt wird, wobei ein Teilpaket von der Gürteltrommel (1) an einen Gürteltragering (2) übergeben wird und an diesem vorerst positioniert bleibt, der Gürteltragering (2) über einer Gürteltrommel (1), auf welcher ein zweites Teilpaket aufgebaut ist, positioniert wird und das Teilpaket des Gürteltrageringes (2) mit jenem auf der Gürteltrommel (1) zusammengefügt wird.

2. Verfahren nach Anspruch 1, **dadurch gekennzeichnet, dass** auf zumindest eines der Teilpakete weitere Bauteile, beispielsweise Gürtelkantenpolster (7) oder Kantenstreifen, aufgebracht werden.

3. Verfahren nach Anspruch 1 oder 2, **dadurch gekennzeichnet, dass** die Teilpakete durch ein Verringern des Innendurchmessers des Gürteltragerings (2) zusammengefügt werden.

4. Verfahren nach Anspruch 1 oder 2, **dadurch gekennzeichnet, dass** die Teilpakete durch eine Vergrößerung des Außendurchmessers der Gürteltrommel (1) zusammengefügt werden.

5. Verfahren nach Anspruch 1 oder 2, **dadurch gekennzeichnet, dass** die Teilpakete durch ein gleichzeitiges Verringern des Innendurchmessers des Gürteltragerings (2) und Vergrößern des Außendurchmessers der Gürteltrommel (1) zusammengefügt werden.

6. Verfahren nach einem der Ansprüche 1 bis 5, **dadurch gekennzeichnet, dass** die Gürteltrommel (1) eine konkav gewölbte Auflagefläche aufweist.

7. Verfahren nach einem der Ansprüche 1 bis 6, **dadurch gekennzeichnet, dass** der Gürteltragering (2) eine konvex gewölbte Innenfläche aufweist.

## Claims

1. Method for producing a belt package for pneumatic vehicle tires comprising at least two belt plies, **characterized in that** the belt package is created from at least two sub-packages, which are joined together to form the complete belt package, each sub-package consisting of at least one belt ply (3, 4; 5, 6), which is automatically placed on a belt drum (1) and automatically spliced a sub-package being transferred from the belt drum (1) to a belt carrying ring (2) and remaining positioned on this for the time being, the belt carrying ring (2) being positioned over a belt drum (1), on which a second sub-package is built up, and the sub-package of the belt carrying ring (2) being joined together with the sub-package on the belt drum (1).

2. Method according to Claim 1, **characterized in that** further components, for example or belt edge pads (7) edge strips are applied to at least one of the sub-packages.

3. Method according to Claims 1 or 2, **characterized in that** the sub-packages are joined together by reducing the inside diameter of the belt carrying ring (2).

4. Method according to Claim 1 or 2, **characterized in that** the sub-packages are joined together by increasing the outside diameter of the belt drum (1).

5. Method according to one of Claims 1 or 2, **characterized in that** the sub-packages are joined together by reducing the inside diameter of the belt carrying ring (2) and at the same time increasing the outside diameter of the belt drum (1).

6. Method according to one of Claims 1 to 5, **characterized in that** the belt drum (1) has a concavely curved supporting surface.

7. Method according to one of Claims 1 to 6, **characterized in that** the belt carrying ring (2) has a convexly curved inner surface.

## Revendications

1. Procédé de fabrication d'un ensemble de ceinture constitué d'au moins deux couches de ceinture, pour bandage pneumatique de roue de véhicule,
**caractérisé en ce que**
l'ensemble de ceinture est formé à partir d'au moins deux ensembles partiels qui sont assemblés pour former l'ensemble complet de ceinture,
chaque ensemble partiel étant constitué d'au moins une couche de ceinture (3, 4; 5, 6) posée automatiquement et ligaturée automatiquement sur un tambour (1) de ceinture,
un ensemble partiel étant transféré du tambour (1) de ceinture à un anneau (2) porte-ceinture et restant d'abord placé sur ce dernier, l'anneau (2) porte-ceinture étant placé au-dessus d'un tambour (1) de ceinture sur lequel un deuxième ensemble partiel a été monté et l'ensemble partiel placé sur l'anneau (2) porte-ceinture est assemblé avec celui déjà placé sur le tambour (1) de ceinture.

2. Procédé selon la revendication 1, **caractérisé en ce que** d'autres composants, par exemple un coussin (7) de bord de ceinture ou des bandes de bord, sont appliqués sur au moins l'un des ensembles partiels.

3. Procédé selon les revendications 1 ou 2, **caractérisé en ce que** les ensembles partiels sont assemblés en diminuant le diamètre intérieur de l'anneau (2) porte-ceinture.

4. Procédé selon les revendications 1 ou 2, **caractérisé en ce que** les ensembles partiels sont assemblés en augmentant le diamètre extérieur du tambour (1) de ceinture.

5. Procédé selon les revendications 1 ou 2, **caractérisé en ce que** les ensembles partiels sont assemblés en diminuant le diamètre intérieur de l'anneau (2) porte-ceinture et en augmentant en même temps le diamètre extérieur du tambour (1) de ceinture.

6. Procédé selon l'une des revendications 1 à 5, **caractérisé en ce que** le tambour (1) de ceinture présente une surface de pose à courbure concave.

7. Procédé selon l'une des revendications 1 à 6, **caractérisé en ce que** l'anneau (2) porte-ceinture présente une surface intérieure à courbure convexe.
